# EUROPÄISCHE PATENTSCHRIFT

(11) **EP 4 556 310 B1**
(45) Veröffentlichungstag und Bekanntmachung des Hinweises auf die Patenterteilung: **25.02.2026**
(21) Anmeldenummer: 24210173.1
(22) Anmeldetag: 31.10.2024
(51) Int. Cl.: B60N 3/04

(54) **FLACHE FUSSMATTENBEFESTIGUNG MIT KLETTELEMENTEN**
FLAT FOOTMAT ATTACHMENT WITH CLIMBING ELEMENTS
FIXATION DE PAILLASSON PLAT AVEC ÉLÉMENTS DE FIXATION À CROCHETS

(30) Priorität: 15.11.2023 DE 102023211368
(43) Veröffentlichungstag der Anmeldung: 21.05.2025
(73) Patentinhaber: Gottlieb Binder GmbH & Co. KG, 71088 Holzgerlingen (DE)
(72) Erfinder: HEEPE, Lars, 72072 Tübingen (DE); POULAKIS, Konstantinos, 71157 Hildrizhausen (DE); TRAMSEN, Halvor, 71088 Holzgerlingen (DE)
(74) Vertreter: Kohler Schmid Möbus Patentanwälte

(56) Entgegenhaltungen:
- DE-A1- 102016 205 291
- DE-U1- 202014 101 483
- US-A1- 2015 140 261

## Beschreibung

### Hintergrund der Erfindung

Die Erfindung betrifft eine Fußmattenanordnung für ein Fahrzeug, wobei die Fußmattenanordnung Folgendes aufweist:
- eine Boden-Verkleidung;
- ein erstes Klettelement mit einer Basisplatte;
- eine Konterplatte, die wenigstens teilweise an der Boden-Verkleidung angeordnet ist;
- eine Fußmatte;
- ein zweites Klettelement, das wenigstens teilweise an einer Unterseite der Fußmatte angeordnet ist;
wobei das zweite Klettelement mit dem ersten Klettelement durch eine Klettverbindung verbunden ist.

Die Erfindung betrifft ferner ein Fahrzeug mit einer solchen Fußmattenanordnung und ein Verfahren zur Herstellung einer solchen Fußmattenanordnung.

Aus der US 2015/0140261 A1 ist eine Fußmattenanordnung bekannt geworden, bei der eine Fußmatte durch Klettelemente an einem Boden eines Fahrzeugs befestigt wird, wobei eines der Klettelemente an dem Boden festgeklebt ist. In ähnlicher Weise lehrt die DE 10 2007 004 146 A1 ein Festkleben von dort offenbarten Kletttellern an einem Fahrzeugboden, um eine feste Verbindung einer Fußmatte mit dem Fahrzeugboden herzustellen. Aus der DE 10 2010 042 284 A1 und der DE 20 2014 101 483 U1 sind Befestigungen von Fußmatten durch Halteelemente bekannt geworden, die in Ausnehmungen im Boden eines Fahrzeugraums verankert sind.

Weitere Anordnungen von Fußmatten sind in der US 2017/0072823 A1, der DE 82 21 629 U1, der US 5 215 348 A1, der KR200204204 Y1, der EP 3 925 770 A2 und der DE 89 11 331 U1 Eine Fussmattenanordung und ein Verfahren zur Herstellung einer Fussmattenanordnung für ein Fahrzeug ist der DE102016205291A1 zu entnehmen.

Insbesondere in elektrisch betriebenen Fahrzeugen steht jedoch aufgrund der Batterien wenig Bauraum im Boden eines Fahrzeugs zur Verfügung.

### Aufgabe der Erfindung

Es ist daher Aufgabe der vorliegenden Erfindung, eine Fußmattenanordnung bereitzustellen, die wenig Bauraum benötigt sowie einen erleichterten Einbau und Ausbau der Fußmattenanordnung ermöglicht. Es ist weiter Aufgabe der Erfindung, ein Fahrzeug mit einer solchen Fußmattenanordnung bereitzustellen. Außerdem ist es Aufgabe der Erfindung, ein Verfahren zur Herstellung einer solchen Fußmattenanordnung anzugeben.

### Beschreibung der Erfindung

Diese Aufgabe wird erfindungsgemäß durch eine Fußmattenanordnung nach Anspruch 1 gelöst. Ferner wird die Aufgabe durch ein Fahrzeug gemäß Anspruch 16 gelöst. Die Aufgabe wird weiterhin durch ein Verfahren mit den Schritten gemäß Anspruch 18 gelöst.

Die erfindungsgemäße Fußmattenanordnung ist dadurch gekennzeichnet, dass ein Verbindungssystem die Basisplatte und die Konterplatte miteinander verbindet, wobei das Verbindungssystem eine elastische Verbindungseinrichtung aufweist, wobei sich die Verbindungseinrichtung zwischen einander zugewandten, insbesondere parallel zueinander verlaufenden, Seiten der Basisplatte und der Konterplatte erstreckt.

Insbesondere ist die Verbindungseinrichtung an einer Seite der Basisplatte und einer Seite der Konterplatte ausgebildet, wobei diese Seiten einander zugewandt sind und sich entlang einer Verbindungssystemachse senkrecht durch diese Seiten einander gegenüberliegen.

Durch die Anordnung der Verbindungseinrichtung zwischen der Basisplatte und der Konterplatte ist die Fußmattenanordnung raumsparend ausgebildet, wobei die elastische Verbindungseinrichtung durch ihre flexible Ausgestaltung den Ein- und Ausbau der Fußmatte erleichtert.

Die Seiten der Basisplatte und der Konterplatte, zwischen denen die Verbindungseinrichtung ausgebildet ist, verlaufen insbesondere parallel oder in einem spitzen Winkel zueinander.

Mit dem Begriff "Seite" ist insbesondere eine Seitenfläche gemeint. Mit dem Ausdruck "wenigstens teilweise" ist insbesondere "teilweise oder vollständig" gemeint.

Die elastische Verbindungseinrichtung weist ein elastisches Bauteil oder mehrere elastische Bauteile auf, die zur Verbindung der Konterplatte und Basisplatte verwendet werden, etwa einen elastischen Verbindungssteg. Die elastische Verbindungseinrichtung weist vorzugsweise ein Polymer mit thermoplastischen und/oder elastischen Eigenschaften auf. Insbesondere ist das Polymer in Form eines thermoplastischen Polymers ausgebildet. Die elastische Verbindungseinrichtung weist typischerweise ein Polymer aus der Gruppe der Polyester, Polyamide und/oder Propylene als Material auf. Bevorzugt weist das Verbindungssystem das Polymer auf, welches die Verbindungseinrichtung aufweist. Typische Werte des Elastizitätsmoduls der elastischen Verbindungseinrichtung liegen im Bereich von 1000 N/mm² bis 5000 N/mm², insbesondere von 1300 N/mm² bis 2500 N/mm². Insbesondere weist das elastische Bauteil eines der vorgenannten Materialien und/oder Elastizitätsmodule auf. Die elastische Verbindungseinrichtung kann eine Verjüngung aufweisen, insbesondere in Abschnitten, die eine Durchgriffsöffnung durchgreifen.

Das Verbindungssystem weist die elastische Verbindungseinrichtung auf und kann darüber hinaus noch weitere elastische und/oder nicht elastische Bauteile aufweisen, die zur Verbindung der Konterplatte und Basisplatte verwendet werden.

Das elastische Bauteil der elastischen Verbindungseinrichtung kann bei einer Verbindung mit anderen Bauteilen des Verbindungssystems eine erheblich geringere elastische Verformbarkeit aufweisen als in einem von dem restlichen Verbindungssystem losgelösten Zustand.

Die Konterplatte, die Basisplatte und die elastische Verbindungseinrichtung, insbesondere in Form eines Verbindungsstegs, können bei einigen Ausführungsformen U-förmig angeordnet oder ausgebildet sein.

Eine vorteilhafte Ausführungsform der Fußmattenanordnung ist dadurch gekennzeichnet, dass die Basisplatte ein erstes Rastelement mit einem ersten Rastabschnitt aufweist und die Konterplatte ein zweites Rastelement mit einem zweiten Rastabschnitt aufweist, wobei die elastische Verbindungseinrichtung wenigstens eines der Rastelemente aufweist, wobei der Rastabschnitt des Rastelements der elastischen Verbindungseinrichtung elastisch verschwenkbar und/oder verformbar ist, wobei das erste Rastelement und das zweite Rastelement unter Anlage des ersten Rastabschnitts an dem zweiten Rastabschnitt miteinander verrastet sind.

Der Einbau der Fußmatte an dem zweiten Klettelement erfolgt vorteilhaft durch ein Verbinden des ersten Klettelements mit dem zweiten Klettelement und ein einfaches Verrasten des ersten Klettelements an der Konterplatte. Umgekehrt kann der Ausbau der Fußmatte durch ein Lösen dieser Rastverbindung und ein Lösen der Klettverbindung zerstörungsfrei erfolgen, ohne dass dafür eine stoffschlüssige Verbindung, etwa eine Klebeverbindung, unter vergleichsweise hohem Zeitaufwand gelöst werden muss.

Die hier verwendeten Lagebezeichnungen "oben", "unten", "Oberseite", "Unterseite" und dergleichen beziehen sich auf den montierten Zustand der Fußmattenanordnung in einem Fahrzeug.

Vorteilhaft ist eine Ausführungsform der Fußmattenanordnung, bei der das erste Rastelement zusammen mit der Basisplatte des ersten Klettelements und/oder das zweite Rastelement zusammen mit der Konterplatte ein Extrusionsprofil mit dem jeweiligen Rastabschnitt aufweist, insbesondere in Form eines Extrusionsprofils ausgebildet ist. Dadurch können die Rastelemente besonders kostengünstig und zeitsparend hergestellt werden. Unter einem Extrusionsprofil wird insbesondere ein Bauteil mit gleichbleibendem Querschnitt verstanden.

Das erste Klettelement kann pilzförmige Vorsprünge aufweisen, die in pilzförmige Vorsprünge des zweiten Klettelements eingreifen. Alternativ oder zusätzlich dazu kann das erste Klettelement Haken und das zweite Klettelement Schlaufen aufweisen. Vorzugsweise weist das erste Klettelement Schlaufen und das zweite Klettelement Haken auf, sodass die Boden-Verkleidung mit dem ersten Klettelement ein optisch einheitliches Erscheinungsbild aufweist, wenn die Fußmatte entnommen ist.

Die pilzförmigen Vorsprünge, die Haken und/oder die Schlaufen können Teil eines Bandes sein. Die Schlaufen können an einem Schlaufenband und/oder die Haken können an einem Hakenband vorgesehen sein. Insbesondere können die Schlaufen an einem Schlaufenband ausgebildet sein und/oder die Haken können an einem Hakenband ausgebildet sein. Das jeweilige Band ist vorzugsweise auf ein Extrusionsprofil oder die Fußmatte aufgeklebt und/oder aufgeschweißt.

Bevorzugt ist eine Ausführungsform der Fußmattenanordnung, bei der das erste Rastelement von einer Oberfläche des ersten Klettelements in Richtung der Konterplatte absteht und/oder das zweite Rastelement von einer Oberfläche der Konterplatte in Richtung des ersten Klettelements absteht. Dies bewirkt eine kompakte Ausgestaltung der Rastverbindung von erstem und zweitem Rastelement.

Bei einer vorteilhaften Ausführungsform der Fußmattenanordnung weist/weisen das erste Rastelement und/oder das zweite Rastelement einen Rastarm auf, wobei der jeweilige Rastarm einen Stamm aufweist, von dem der jeweilige Rastabschnitt absteht. Durch einen Rastarm mit dem Rastabschnitt kann die elastische Auslenkbarkeit und/oder Verformbarkeit des Rastabschnitts besonders einfach bewirkt werden.

Bei einer Weiterbildung der vorgenannten Ausführungsform der Fußmattenanordnung weist das jeweilige Rastelement mehrere Rastarme auf, insbesondere zwei Rastarme. Da bei dieser Weiterbildung mehrere Rastarme Kräften auf die Fußmatte entgegenwirken, können die einzelnen Rastarme ein geringeres Belastungsvermögen aufweisen als bei der Verwendung nur eines Rastarms des jeweiligen Rastelements. Daher können die Rastarme zum Beispiel mit einer geringeren Materialdicke ausgebildet sein. Dadurch können die Rastarme und damit die Fußmattenanordnung bei hoher Stabilität besonders flach ausgestaltet werden.

Bei einer weiteren Ausführungsform der Fußmattenanordnung verläuft der Rastabschnitt des ersten Rastelementes parallel zu einer Seitenfläche des ersten Klettelements und/oder der Rastabschnitt des zweiten Rastelements parallel zu einer Seitenfläche der Konterplatte, wobei der Rastarm von der jeweiligen Seitenfläche absteht. Dadurch wird eine stabile Rastverbindung bewirkt, wenn die Rastarme ineinandergreifen und die Rastabschnitte aneinander anliegen.

Vorteilhaft ist eine Ausführungsform der Fußmattenanordnung, bei der an dem jeweiligen Rastarm mehrere, insbesondere einander gegenüberliegende, Rastabschnitte ausgebildet sind. Dies erhöht die Flexibilität bei der Auswahl der Rastabschnitte, welche miteinander verrastet werden.

Bevorzugt ist eine Ausführungsform der Fußmattenanordnung, bei der:
- die Boden-Verkleidung eine Durchgriffsöffnung aufweist;
- die Basisplatte wenigstens teilweise an einer Oberseite der Boden-Verkleidung angeordnet ist;
- die Konterplatte wenigstens teilweise an einer Unterseite der Boden-Verkleidung angeordnet ist, die der Oberseite der Boden-Verkleidung gegenüberliegt;
- das zweite Klettelement wenigstens teilweise an einer Unterseite der Fußmatte angeordnet ist;
wobei das Verbindungssystem die Durchgriffsöffnung durchgreift.

Die Basisplatte und die Konterplatte können durch ein Hindurchführen des Verbindungssystems durch die Durchgriffsöffnung und ein Anlegen an die Boden-Verkleidung raum- und materialsparend an der Boden-Verkleidung befestigt werden. Durch das Verbinden der Basisplatte an der Boden-Verkleidung mit Hilfe der Konterplatte sind vorzugsweise keine Ausnehmungen oder Vorsprünge des Bodens eines Kraftfahrzeugs zur Befestigung notwendig, um die Fußmatte fest mit dem Boden zu verbinden. Dadurch kann die Fußmattenanordnung flach ausgebildet werden, sodass der Bauraum, den die Fußmattenanordnung benötigt, gering ist.

Die elastische Verbindungseinrichtung ermöglicht dabei ein einfaches Verbinden der Basisplatte und der Konterplatte aneinander und/oder ein Anpressen an die Boden-Verkleidung, um die Verbindung der vorgenannten Platten mit der Boden-Verkleidung stabiler auszugestalten.

Nach dem Fixieren der Basisplatte an der Konterplatte erfolgt in einfacher Weise eine Befestigung der Fußmatte durch Verbinden des ersten Klettelements, das die Basisplatte aufweist, mit dem zweiten Klettelement, das an der Fußmatte angeordnet ist. Dabei ist das zweite Klettelement bevorzugt fest mit der Fußmatte verbunden. Die Fußmattenanordnung kann somit vorteilhaft raumsparend und zeitsparend montiert werden.

Bei einer Weiterbildung der vorgenannten Ausführungsform der Fußmattenanordnung ist das wenigstens eine Rastelement der elastischen Verbindungseinrichtung in die Durchgriffsöffnung eingeführt.

Dadurch können die Rastelemente besonders raumsparend verbunden werden.

Von Vorteil ist eine Ausführungsform der Fußmattenanordnung, bei der die Konterplatte wenigstens teilweise an der Oberseite der Boden-Verkleidung stoffschlüssig befestigt ist, insbesondere durch Klebstoff oder eine Schweißverbindung. Dadurch ist die Konterplatte besonders stabil an der Boden-Verkleidung montiert.

Bei einer Weiterbildung der vorgenannten Ausführungsform ist die Verbindungseinrichtung wenigstens teilweise zwischen der Oberseite der Boden-Verkleidung und der Unterseite der Fußmatte ausgebildet. Dadurch ist die Verbindungseinrichtung vergleichsweise leicht zugänglich.

Bevorzugt ist eine Ausführungsform der Fußmattenanordnung, bei der die elastische Verbindungseinrichtung ein elastisches Filmscharnier aufweist, wobei das elastische Filmscharnier insbesondere die Konterplatte und die Basisplatte miteinander verbindet. Dadurch sind das erste Klettelement und die Konterplatte stabil miteinander verbunden, können aber flexibel gegeneinander ausgerichtet werden, um die Handhabung des ersten Klettelements und der Konterplatte zu erleichtern. Besonders bevorzugt sind die Basisplatte, die Konterplatte und der Verbindungssteg einstückig miteinander ausgebildet.

Bei einer vorteilhaften Ausführungsform der Fußmattenanordnung weist die Konterplatte und/oder das erste Klettelement einen Stützvorsprung auf, der von der jeweiligen Oberfläche der Konterplatte oder des ersten Klettelements absteht. Der Stützvorsprung dient insbesondere dazu, das erste Klettelement und die Konterplatte gegeneinander abzustützen. Dadurch sind die Stabilität der Lage und Form des ersten Klettelements und der Konterplatte in der Fußmattenanordnung besser gewährleistet.

Eine bevorzugte Ausführungsform der Fußmattenanordnung zeichnet sich dadurch aus, dass die Konterplatte mit einem Lärmschutz ausgebildet ist. Dadurch wird ein von der Konterplatte erzeugter Lärm unterdrückt. Der Lärmschutz kann in Form eines Klotzes, mehreren Klötzen und/oder einer Beschichtung vorliegen. Der Lärmschutz kann ein weiches und/oder akustisch dämpfendes Material aufweisen.

Ein erfindungsgemäßes Fahrzeug weist eine vorgenannte Fußmattenanordnung auf. Bei einem solchen Fahrzeug ist der Verbrauch an Bauraum für die Fußmattenanordnung gering, wobei die Fußmattenanordnung zeitsparend eingebaut und ausgebaut werden kann.

Bei einer bevorzugten Ausführungsform des Fahrzeugs ist die Konterplatte fest mit einem Boden des Fahrzeugs verbunden, insbesondere einstückig mit dem Boden des Fahrzeugs ausgebildet. Dadurch kann die Fußmattenanordnung besonders raumsparend und positionsfest ausgebildet sein.

Die Erfindung umfasst weiterhin ein Verfahren zur Herstellung einer Fußmattenanordnung für ein Fahrzeug, bei dem die Fußmattenanordnung Folgendes aufweist:
- eine Boden-Verkleidung (12);
- ein erstes Klettelement (18) mit einer Basisplatte (88);
- eine Konterplatte (38), die wenigstens teilweise an der Boden-Verkleidung (12) angeordnet ist;
- eine Fußmatte (10);
- ein zweites Klettelement (20), das wenigstens teilweise an einer Unterseite (22) der Fußmatte (10) angeordnet ist;

wobei das zweite Klettelement (20) mit dem ersten Klettelement (18) durch eine Klettverbindung (36) verbunden wird,
wobei das Verfahren dadurch gekennzeichnet ist,
dass die Basisplatte (88) und die Konterplatte (38) durch ein Verbindungssystem miteinander verbunden sind oder verbunden werden,
wobei das Verbindungssystem eine elastische Verbindungseinrichtung (90) aufweist, wobei die Verbindungseinrichtung (90) sich zwischen parallel zueinander verlaufenden, einander zugewandten Seiten der Basisplatte (88) und der Konterplatte (38) erstreckt.

Dadurch kann die Fußmatte raumsparend und flexibel an der Boden-Verkleidung angeordnet werden.

Eine Weiterbildung des vorgenannten Verfahrens, bei der die Basisplatte ein erstes Rastelement mit einem ersten Rastabschnitt aufweist und die Konterplatte ein zweites Rastelement mit einem zweiten Rastabschnitt aufweist, weist die folgenden Schritte auf:
i. Verrasten des ersten Rastelements und des zweiten Rastelements miteinander durch ein elastisches Verschwenken und/oder Verformen eines der Rastabschnitte unter Anlegen des ersten Rastabschnitts an den zweiten Rastabschnitt, wobei die elastische Verbindungseinrichtung das wenigstens eine Rastelement mit dem elastischen Rastabschnitt aufweist;
ii. Verbinden des ersten Klettelements und des zweiten Klettelements.

Durch ein solches Verfahren können die Basisplatte und die Konterplatte besonders einfach verbunden werden.

Bei einer Weiterbildung der vorgenannten Ausgestaltung des Verfahrens weist die Boden-Verkleidung eine Durchgriffsöffnung auf, wobei die elastische Verbindungseinrichtung in die Durchgriffsöffnung eingeführt wird, wobei die Basisplatte wenigstens teilweise an einer Oberseite der Boden-Verkleidung angeordnet wird, wobei die Konterplatte wenigstens teilweise an einer Unterseite der Boden-Verkleidung angeordnet wird, die der Oberseite der Boden-Verkleidung gegenüberliegt. Dadurch kann die Fußmattenanordnung flach ausgebildet werden, sodass der Bauraum, den die Fußmattenanordnung benötigt, gering ist.

Vorteilhaft ist eine Weiterbildung der vorgenannten Ausgestaltung des Verfahrens, bei der das wenigstens eine Rastelement der elastischen Verbindungseinrichtung in die Durchgriffsöffnung eingeführt wird. Dadurch können die Rastelemente besonders raumsparend verbunden werden.

Weitere Vorteile der Erfindung ergeben sich aus der Beschreibung und der Zeichnung. Ebenso können die vorstehend genannten und die noch weiter ausgeführten Merkmale jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1a: zeigt schematisch eine Schnittansicht durch eine Fußmattenanordnung in einer ersten Ausführungsform, wobei Klettelemente der Fußmattenanordnung getrennt sind.
- Fig. 1b: zeigt schematisch die Schnittansicht durch die Fußmattenanordnung aus Fig. 1a, wobei die Klettelemente der Fußmattenanordnung verbunden sind.
- Fig. 2a: zeigt schematisch eine Schnittansicht durch eine Boden-Verkleidung und eine Konterplatte einer Fußmattenanordnung in einer zweiten Ausführungsform.
- Fig. 2b: zeigt schematisch eine Draufsicht auf die Boden-Verkleidung und die Konterplatte aus Fig. 2a.
- Fig. 2c: zeigt schematisch eine Schnittansicht durch die Konterplatte, die Boden-Verkleidung und ein erstes Klettelement der Fußmattenanordnung in der zweiten Ausführungsform.
- Fig. 2d: zeigt schematisch eine Schnittansicht durch die Boden-Verkleidung und die mit dem ersten Klettelement verbundene Konterplatte gemäß der zweiten Ausführungsform.
- Fig. 2e: zeigt schematisch eine Schnittansicht durch die Fußmattenanordnung gemäß der zweiten Ausführungsform vor der Anbindung einer Fußmatte.
- Fig. 2f: zeigt schematisch eine Schnittansicht durch die Fußmattenanordnung aus Fig. 2e im angebundenen Zustand der Fußmatte.
- Fig. 3: zeigt schematisch eine Schnittansicht durch eine dritte Ausführungsform einer Fußmattenanordnung mit einem Stützvorsprung.
- Fig. 4: zeigt schematisch eine Schnittansicht durch eine vierte Ausführungsform einer Fußmattenanordnung mit einem Filmscharnier.
- Fig. 5a: zeigt schematisch eine Schnittansicht durch eine weitere Anordnung eines ersten Klettelements, einer Konterplatte und einer Boden-Verkleidung.
- Fig. 5b: zeigt schematisch eine Schnittansicht durch eine fünfte Ausführungsform einer Fußmattenanordnung, wobei Klettelemente der Fußmattenanordnung getrennt sind.
- Fig. 5c: zeigt schematisch die Schnittansicht durch die Fußmattenanordnung aus Fig. 5b, wobei die Klettelemente der Fußmattenanordnung verbunden sind.
- Fig. 6: zeigt schematisch eine Seitenansicht eines Fahrzeugs mit einer erfindungsgemäßen Fußmattenanordnung.

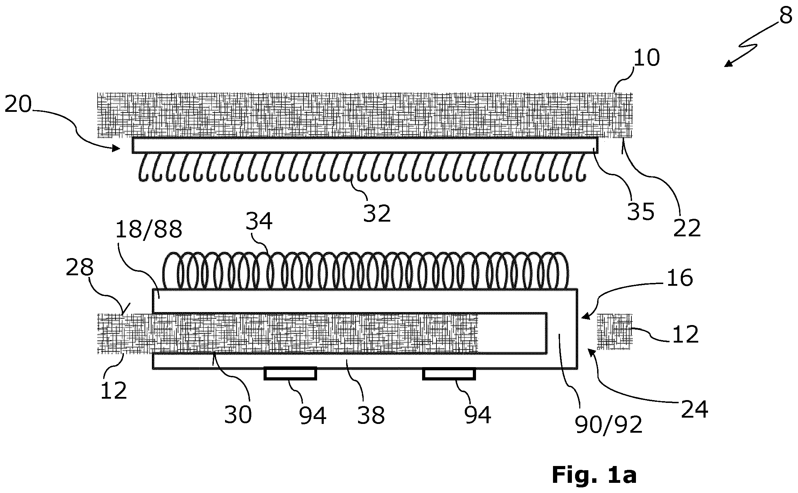

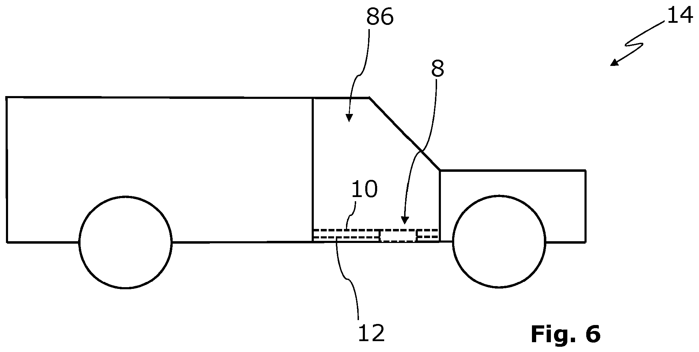

**Fig. 1a** zeigt schematisch eine Schnittansicht durch eine erste Ausführungsform einer Fußmattenanordnung 8. Die Fußmattenanordnung 8 weist eine Fußmatte **10** und eine Boden-Verkleidung **12** auf, wobei die Boden-Verkleidung 12 an einem Boden eines Fahrzeugs **14** (siehe Fig. 6) befestigt ist. Die Fußmattenanordnung 8 weist ein erstes Klettelement **18** an der Boden-Verkleidung 12 auf, wobei das erste Klettelement 18 mit einer Basisplatte **88** wenigstens teilweise an einer Oberseite **28** der Boden-Verkleidung 12 angeordnet ist. Ferner weist die Fußmattenanordnung 8 ein zweites Klettelement **20** an der Unterseite **22** der Fußmatte 10 auf. Das zweite Klettelement 20 ist an der Unterseite 22 der Fußmatte 10 befestigt, insbesondere angeklebt oder angeschweißt.

Eine Konterplatte **38** ist an einer Unterseite **30** der Boden-Verkleidung 12 angeordnet. Ein Verbindungssystem **16** verbindet die Basisplatte 88 und die Konterplatte 38. Das Verbindungssystem 16 weist eine elastische Verbindungseinrichtung **90** auf. In der gezeigten Ausführungsform ist die elastische Verbindungseinrichtung 90 in Form eines elastischen Verbindungsstegs **92** ausgebildet, der sich durch eine Durchgriffsöffnung **24** der Boden-Verkleidung 12 hindurcherstreckt. Auf diese Weise ist das erste Klettelement 18 fest in der Boden-Verkleidung 12 verankert. An der Konterplatte 38 kann sich ein Lärmschutz **94** befinden.

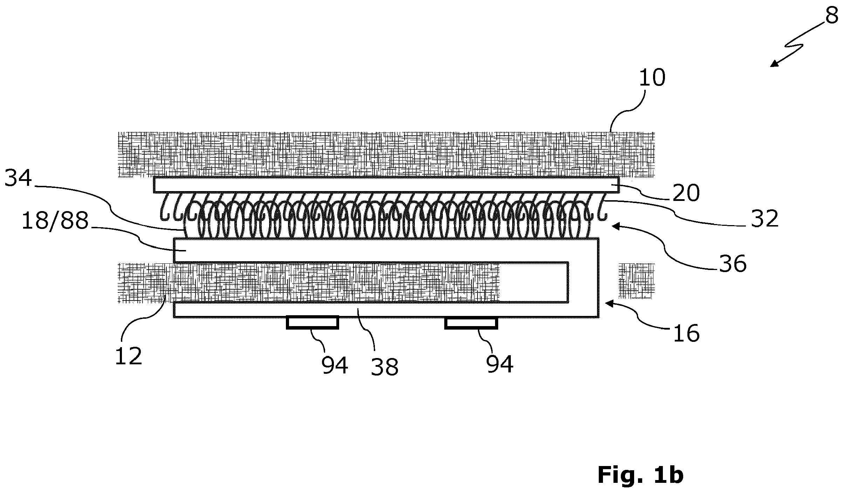

Das erste Klettelement 18 ist derart komplementär zu dem zweiten Klettelement 20 strukturiert, dass das erste Klettelement 18 und das zweite Klettelement 20 eine Klettverbindung **36** (siehe Fig. 1b) ausbilden können, um die Fußmatte 10 fest mit der Boden-Verkleidung 12 zu verbinden. In der gezeigten Ausführungsform der Klettelemente 18, 20 weist das zweite Klettelement 20 Haken **32** und das erste Klettelement 18 mit den Haken 32 korrespondierende Schlaufen **34** auf, wodurch die Klettverbindung 36 des ersten Klettelements 18 und des zweiten Klettelements 20 ermöglicht wird. In anderen Ausführungsformen können das erste Klettelement 18 die Haken 32 und das zweite Klettelement 20 die Schlaufen 34 aufweisen. Die Haken 32 können Teil eines Hakenbandes **35** sein.

**Fig. 1b** zeigt schematisch eine Schnittansicht durch die Fußmattenanordnung 8 mit der Fußmatte 10 und der Bodenmatte 12, wobei die Konterplatte 38 durch das Verbindungssystem 16 an der Basisplatte 88 befestigt ist. Die Klettelemente 18, 20 der Fußmattenanordnung 8 bilden die Klettverbindung 36 aus, indem die Haken 32 des zweiten Klettelements 20 in die Schlaufen 34 des ersten Klettelements 18 eingreifen.

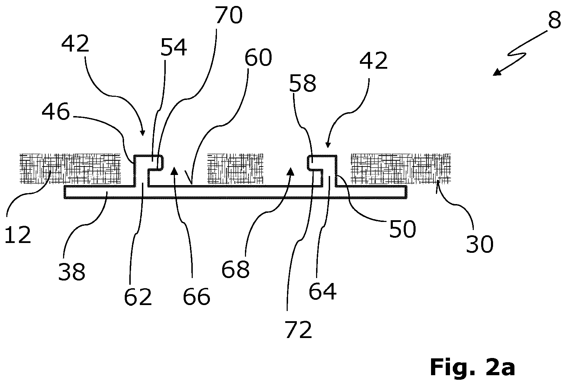

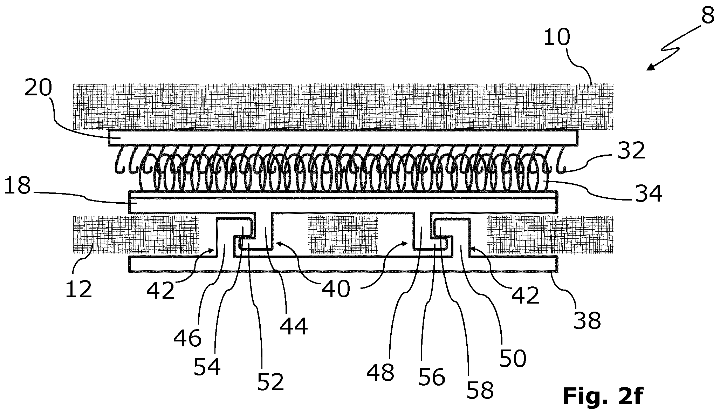

Wie nachfolgend anhand der Fign. 2a bis 2f genauer erläutert wird, kann die Fußmattenanordnung 8 in einigen Ausführungsformen ein erstes Rastelement **40** und ein zweites Rastelement **42** aufweisen, insbesondere mit einem ersten, zweiten, dritten und vierten Rastarm **44, 46, 48, 50** auf (siehe Fig. 2f). An den Rastarmen 44, 46, 48, 50 können ein erster, zweiter, dritter und vierter Rastabschnitt **52, 54, 56, 58** ausgebildet sein.

**Fig. 2a** zeigt schematisch eine Schnittansicht durch einen unteren Teil einer Fußmattenanordnung 8 in einer zweiten Ausführungsform. Die Unterseite 30 der Boden-Verkleidung 12 berührt die Konterplatte 38, wobei sich die Konterplatte 38 an der Unterseite 30 der Boden-Verkleidung 12 entlang erstreckt. Auf der Oberseite **60** der Konterplatte 38 ist das zweite Rastelement 42 angeordnet, wobei das zweite Rastelement 42 mit dem zweiten und vierten Rastarm 46, 50 ausgebildet ist, die von der Oberseite 60 der Konterplatte 38 abstehen. Von einem Stamm **62, 64** des jeweiligen Rastarms 46, 50 stehen der zweite und vierte Rastabschnitt 54, 58, insbesondere senkrecht, ab. Die Rastabschnitte 54, 58 dienen der Verrastung des jeweiligen Rastarms 46, 50. Die Rastarme 46, 50 sind durch die Rastabschnitte 54, 58 hakenförmig ausgestaltet und greifen in jeweils eine Durchgriffsöffnung **66, 68** der Boden-Verkleidung 12 ein.

Die Rastabschnitte 54, 58 verlaufen vorzugsweise parallel zu der Oberseite 60 der Konterplatte 38. Insbesondere sind Kanten **70, 72** der Rastabschnitte 54, 58, die von dem jeweiligen Stamm 62, 64 abstehen und zu einem äußeren Ende des betreffenden Rastabschnitts 54, 58 verlaufen, parallel zu der Oberseite 60 der Konterplatte 38 ausgerichtet. Die Rastabschnitte 54, 58 an den Rastarmen 46, 50 sind elastisch verschwenkbar und/oder verformbar ausgestaltet.

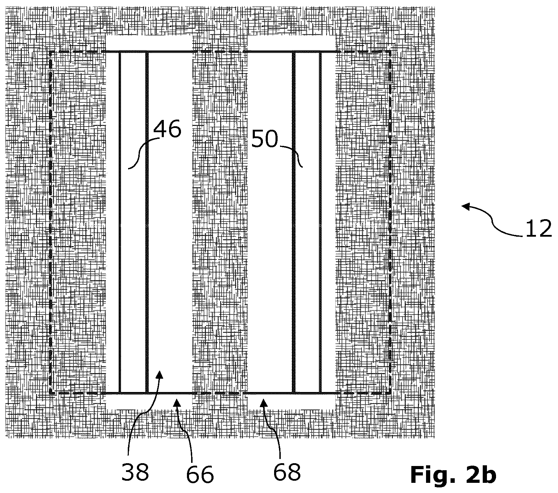

**Fig. 2b** zeigt schematisch eine Draufsicht auf die Boden-Verkleidung 12 und die zugehörige Konterplatte 38. Bereiche der Konterplatte 38, die von der Boden-Verkleidung 12 überdeckt werden, sind dabei durch gestrichelte Linien angedeutet. Dargestellt sind ebenfalls die Rastarme 46, 50, welche die Durchgriffsöffnungen 66, 68 der Boden-Verkleidung 12 durchgreifen.

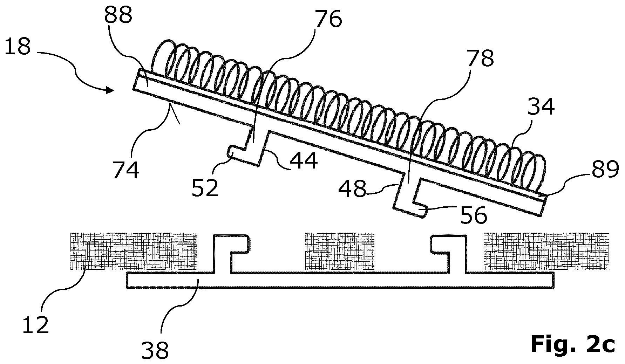

**Fig. 2c** zeigt schematisch eine Schnittansicht durch eine Ausführungsform des ersten Klettelements 18, das an die Konterplatte 38 und die Boden-Verkleidung 12 (vgl. Fig. 2a) herangeführt wird, um mit der Konterplatte 38 verrastet zu werden. Von der Unterseite 74 einer Basisplatte **88** des ersten Klettelements 18 stehen der erste und dritte Rastarm 44, 48, insbesondere senkrecht, ab. Der erste und dritte Rastabschnitt 52, 56 ragen aus dem Stamm **76, 78** des jeweiligen Rastarms 44, 48, wobei die Rastabschnitte 52, 56 insbesondere senkrecht zu dem betreffenden Stamm 76, 78 ausgerichtet sind. Die Rastarme 44, 48 sind dadurch hakenförmig ausgebildet. Die Rastabschnitte 52, 56 verlaufen insbesondere parallel zu der Unterseite 74 des ersten Klettelements 18. An der Basisplatte 88 ist vorzugsweise ein Schlaufenband **89** mit den Schlaufen 34 des ersten Klettelements 18 angeklebt und/oder angeschweißt.

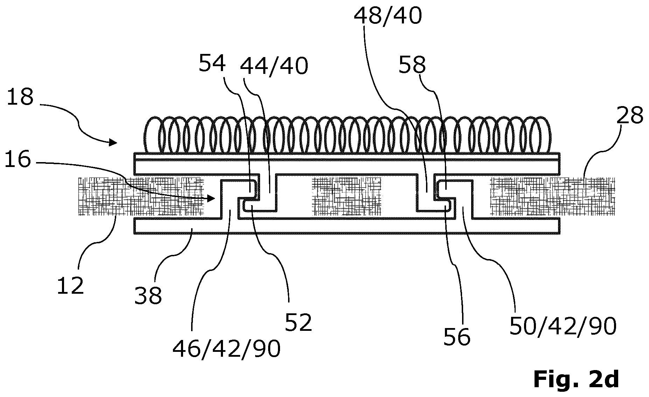

**Fig. 2d** zeigt schematisch eine Schnittansicht durch die vorgenannte Ausführungsform des ersten Klettelements 18, das an der Konterplatte 38 befestigt ist und an der Oberseite 28 der Boden-Verkleidung 12 anliegt. Die Rastabschnitte 52, 54 des ersten und zweiten Rastarms 44, 46 sowie die Rastabschnitte 56, 58 des dritten und vierten Rastarms 48, 50 liegen aneinander an, wobei die Rastarme 44, 46, 48, 50 derart ineinandergreifen, dass sie miteinander verrastet sind. Von den Rastabschnitten 52, 54, 56, 58 an den Rastarmen 44, 46, 48, 50, die miteinander verrastet sind, ist vorzugsweise jeweils wenigstens einer elastisch verschwenkbar und/oder verformbar. Dies ermöglicht die Verrastung der Rastarme 44, 46, 48, 50.

Beispielhaft sind in der gezeigten Ausführungsform die Rastabschnitte 54, 58 der Rastarme 46, 50 elastisch ausgebildet. Die elastische Verbindungseinrichtung 90 des Verbindungssystems 16 weist dann die Rastarme 46, 50 mit den elastischen Rastabschnitten 54, 58 auf.

Die Rastarme 44, 46, 48, 50, und damit die Rastelemente 40, 42, sind bevorzugt als Extrusionsprofil oder als Teil eines Extrusionsprofils ausgebildet.

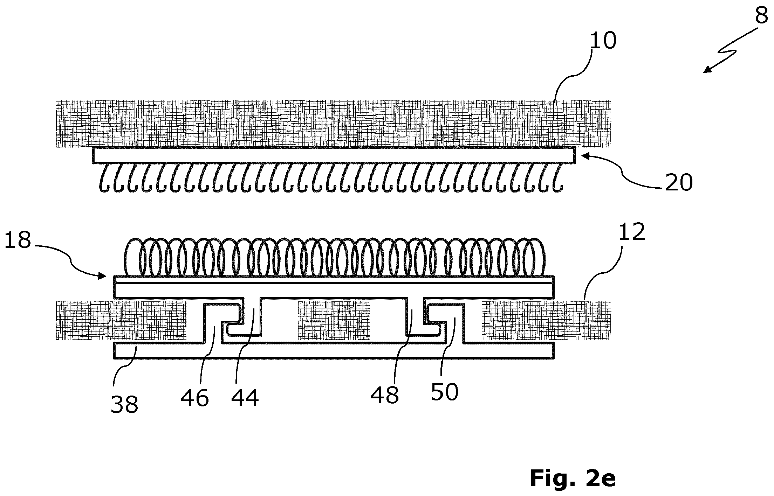

**Fig. 2e** zeigt schematisch eine Schnittansicht durch eine erfindungsgemäße Ausführungsform der Fußmattenanordnung 8. Die Fußmattenanordnung 8 weist die Fußmatte 10, die Boden-Verkleidung 12, das erste Klettelement 18 und das zweite Klettelement 20 sowie die Konterplatte 38 auf, wobei die Konterplatte 38 durch die Rastarme 44, 46, 48, 50 an dem ersten Klettelement 18 befestigt ist. Das erste Klettelement 18 ist in dem in Fig. 2e gezeigten Zustand der Fußmattenanordnung 8 von dem zweiten Klettelement 20 getrennt. Das erste Klettelement 18 wird an das zweite Klettelement 20 herangeführt, um die beiden Klettelemente 18, 20 fest miteinander zu verbinden und die Fußmatte 10 an der Boden-Verkleidung 12 zu befestigen.

**Fig. 2f** zeigt schematisch eine Schnittansicht durch eine zusammengeführte Ausführungsform der Fußmattenanordnung 8. Die Fußmatte 10 ist durch die Fußmattenanordnung 8 fest mit der Boden-Verkleidung 12 verbunden. Die Haken 32 des zweiten Klettelements 20 greifen in die Schlaufen 34 des ersten Klettelements 18 ein, wobei das erste Klettelement 18 durch die verrasteten Rastarme 44, 46, 48, 50 und die Konterplatte 38 an der Boden-Verkleidung 12 fest verankert ist. Dadurch ist die Fußmatte 10 an der Boden-Verkleidung 12 rutschsicher befestigt. Der erste Rastarm 44 weist, wie zuvor erwähnt, den ersten Rastabschnitt 52, der zweite Rastarm 46 den zweiten Rastabschnitt 54, der dritte Rastarm 48 den dritten Rastabschnitt 56 und der vierte Rastarm 50 den vierten Rastabschnitt 58 auf, wobei die Rastabschnitte 52, 54, 56 und 58 zum Verrasten der Rastarme 44, 46, 48 und 50 aneinander anliegen bzw. sich die Rastarme 44, 46, 48, 50 hintergreifen.

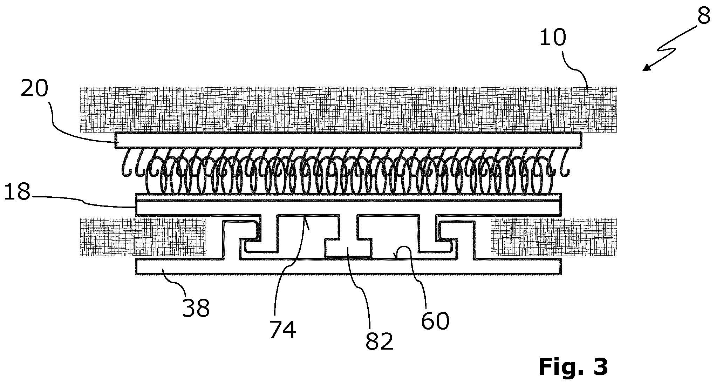

**Fig. 3** zeigt schematisch eine Schnittansicht durch eine dritte Ausführungsform einer Fußmattenanordnung 8, bei der an der Unterseite 74 des ersten Klettelements 18 ein Stützvorsprung **82** ausgebildet ist. Der Stützvorsprung 82 ist hier in Form eines kopfüber stehenden "T" ausgebildet, wobei der Stützvorsprung 82 aus der Unterseite 74 des ersten Klettelements 18, insbesondere senkrecht, herausragt. Der Stützvorsprung 82 liegt flächig an der Oberseite 60 der Konterplatte 38 an, um das erste Klettelement 18 in der Fußmattenanordnung 8 zu stabilisieren.

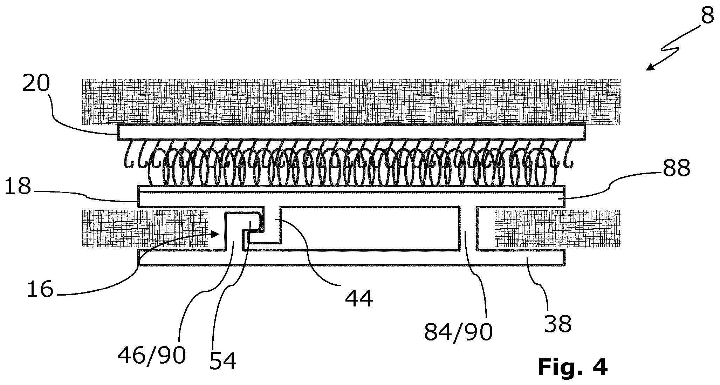

**Fig. 4** zeigt schematisch eine Schnittansicht durch eine vierte Ausführungsform einer Fußmattenanordnung 8, bei der das erste Klettelement 18 gemäß einer Ausführungsform ausgebildet ist, in der das erste Klettelement 18 lediglich den ersten Rastarm 44 aufweist. Die Konterplatte 38 ist in einer Ausführungsform ausgebildet, in der der die Konterplatte 38 lediglich den zweiten Rastarm 46 aufweist. Die Rastarme 44, 46 greifen ineinander und sind miteinander verrastet. Weiterhin erstreckt sich von dem ersten Klettelement 18 zu der Konterplatte 38 ein Filmscharnier **84,** welches das erste Klettelement 18 und die Konterplatte 38 stoffschlüssig verbindet. Vorzugsweise sind Konterplatte 38 und Basisplatte 88 einstückig mit dem Filmscharnier 84 ausgebildet. Dadurch sind das erste Klettelement 18 und die Konterplatte 38 besonders leicht montierbar.

Beispielhaft sind in der gezeigten Ausführungsform der Rastabschnitt 54 des Rastarms 46 und das Filmscharnier 84 elastisch ausgebildet. Die elastische Verbindungseinrichtung 90 des Verbindungssystems 16 weist dann den Rastarm 46 mit dem elastischen Rastabschnitt 54 und das Filmscharnier 84 auf.

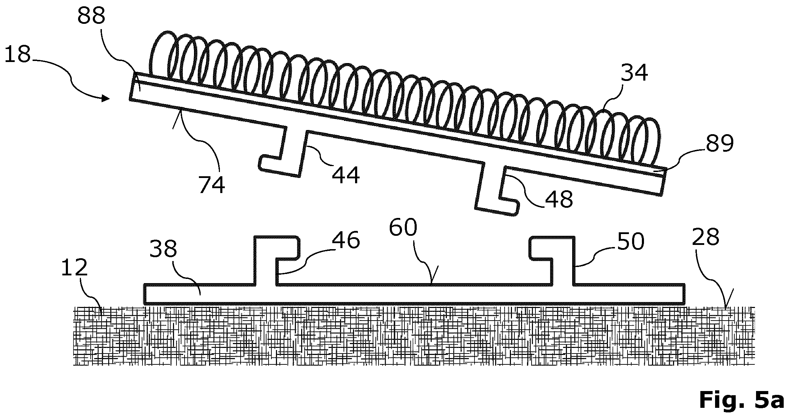

**Fig. 5a** zeigt schematisch eine Schnittansicht durch eine weitere Anordnung eines ersten Klettelements 18, einer Konterplatte 38 und einer Boden-Verkleidung 12, wobei das erste Klettelement 18 an die Konterplatte 38 und die Boden-Verkleidung 12 herangeführt wird, um mit der Konterplatte 38 verrastet zu werden. Die Konterplatte 38 ist auf der Oberseite 28 der Boden-Verkleidung 12 befestigt, insbesondere durch Stoffschluss, z.B. mit Klebstoff oder einer Schweißverbindung. Von der Unterseite 74 der Basisplatte 88 des ersten Klettelements 18 stehen ein erster und ein dritter Rastarm 44, 48 ab. Von der Oberseite 60 der Konterplatte 38 stehen entsprechend ein zweiter und vierter Rastarm 46, 50 ab. An der Basisplatte 88 ist vorzugsweise das Schlaufenband 89 mit den Schlaufen 34 des ersten Klettelements 18 angeklebt und/oder angeschweißt.

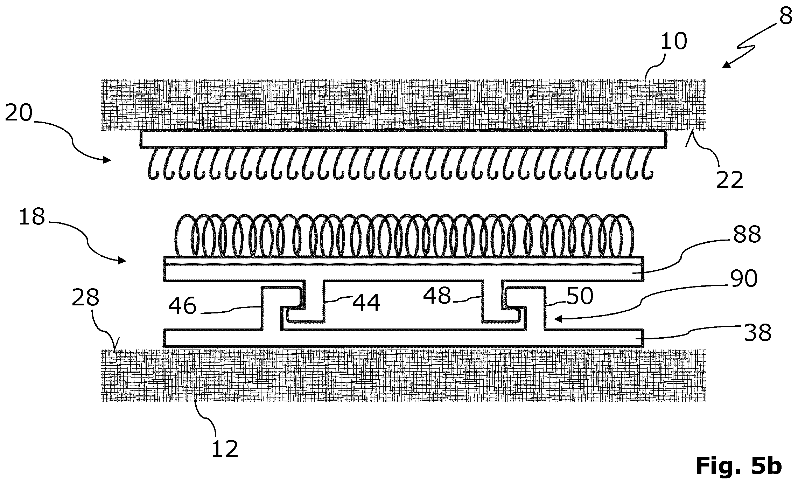

**Fig. 5b** zeigt schematisch eine Schnittansicht durch eine fünfte Ausführungsform der Fußmattenanordnung 8. Die Fußmattenanordnung 8 weist eine Fußmatte 10 und die Boden-Verkleidung 12 auf. Zu der Fußmattenanordnung 8 gehört das erste Klettelement 18 mit der Basisplatte 88 und der Konterplatte 38 an der Oberseite 28 der Boden-Verkleidung 12. Die Basisplatte 88 und die Konterplatte 38 sind durch eine Verbindungseinrichtung 90 in Form der verrasteten Rastarme 44, 46, 48, 50 miteinander verbunden. Ferner weist die Fußmattenanordnung 8 das zweite Klettelement 20 auf, das an der Unterseite 22 der Fußmatte 10 befestigt ist.

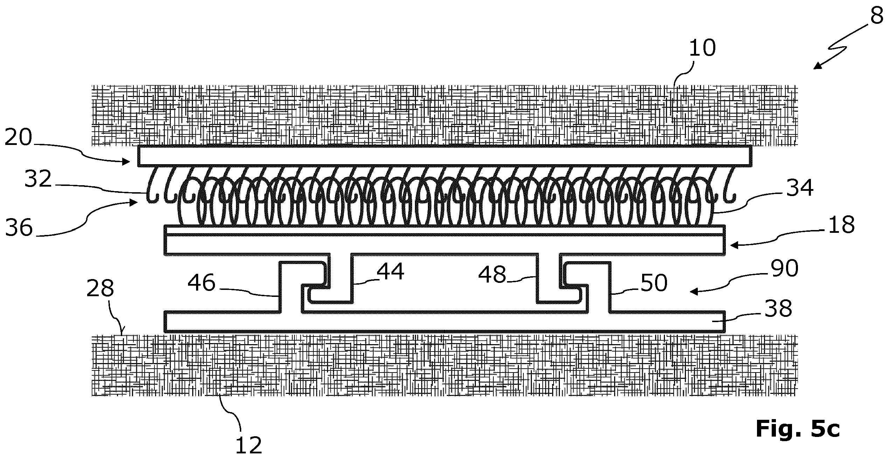

**Fig. 5c** zeigt schematisch eine Schnittansicht durch die fünfte Ausführungsform der Fußmattenanordnung 8, wobei das erste Klettelement 18 und das zweite Klettelement 20 eine Klettverbindung 36 ausbilden. Die Fußmatte 10 ist durch die Fußmattenanordnung 8 fest mit der Boden-Verkleidung 12 verbunden. Die Haken 32 des zweiten Klettelements 20 greifen in die Schlaufen 34 des ersten Klettelements 18 ein. Das erste Klettelement 18 ist durch die verrasteten Rastarme 44, 46, 48, 50 und die Konterplatte 38 an der Oberseite 28 der Boden-Verkleidung 12 fest verankert. Die Konterplatte 18 ist durch einen Stoffschluss fest mit der Boden-Verkleidung 12 verbunden. Dadurch ist die Fußmatte 10 an der Boden-Verkleidung 12 rutschsicher befestigt.

**Fig. 6** zeigt schematisch eine Seitenansicht eines Fahrzeugs 14 mit einer erfindungsgemäßen Fußmattenanordnung 8 gemäß einer der vorgenannten Ausführungsformen. Die Fußmattenanordnung 8 mit der im Fahrzeug 14 fest angeordneten Boden-Verkleidung 12 und der Fußmatte 10 in einem Fahrerraum **86** sind in der Fig. 6 gestrichelt dargestellt.

Unter Vornahme einer Zusammenschau aller Figuren der Zeichnung betrifft die Erfindung zusammenfassend eine Fußmattenanordnung 8 mit einem ersten Klettelement 18 und einem zweiten Klettelement 20, das wenigstens teilweise an einer Unterseite (22) der Fußmatte (10) angeordnet ist. Eine Konterplatte 38 ist an einer Boden-Verkleidung 12 befestigt. Ein Verbindungssystem 16 verbindet eine Basisplatte 88 des ersten Klettelements 18 mit der Konterplatte 38. Das Verbindungssystem 16 ist wenigstens teilweise mit einer elastischen Verbindungseinrichtung 90 ausgebildet. Die Verbindungseinrichtung 90 ist vorzugsweise an einer Seite 74 der Basisplatte 88 und einer Seite 60 der Konterplatte 38 ausgebildet, wobei diese Seiten 74, 60 einander zugewandt sind und sich entlang einer Verbindungssystemachse senkrecht durch diese Seiten 74, 60 einander gegenüberliegen.

### Bezugszeichenliste

- 8: Fußmattenanordnung
- 10: Fußmatte
- 12: Boden-Verkleidung
- 14: Fahrzeug
- 16: Verbindungssystem
- 18: erstes Klettelement
- 20: zweites Klettelement
- 22: Unterseite der Fußmatte
- 24: Durchgriffsöffnung
- 28: Oberseite der Boden-Verkleidung
- 30: Unterseite der Boden-Verkleidung
- 32: Haken
- 34: Schlaufen
- 35: Hakenband
- 36: Klettverbindung
- 38: Konterplatte
- 40: erstes Rastelement
- 42: zweites Rastelement
- 44: erster Rastarm
- 46: zweiter Rastarm
- 48: dritter Rastarm
- 50: vierter Rastarm
- 52: erster Rastabschnitt
- 54: zweiter Rastabschnitt
- 56: dritter Rastabschnitt
- 58: vierter Rastabschnitt
- 60: Oberseite der Konterplatte
- 62: Stamm des zweiten Rastarms
- 64: Stamm des vierten Rastarms
- 66: Durchgriffsöffnung
- 68: Durchgriffsöffnung
- 70: Kante des Rastabschnitts
- 72: Kante des Rastabschnitts
- 74: Unterseite des ersten Klettelements
- 76: Stamm des ersten Rastarms
- 78: Stamm des zweiten Rastarms
- 82: Stützvorsprung
- 84: Filmscharnier
- 86: Fahrerraum
- 88: Basisplatte des ersten Klettelements
- 89: Schlaufenband
- 90: Verbindungseinrichtung
- 92: Verbindungssteg
- 94: Lärmschutz

## Patentansprüche

1. Fußmattenanordnung (8) für ein Fahrzeug (14), wobei die Fußmattenanordnung (8) Folgendes aufweist:
- eine Boden-Verkleidung (12);
- ein erstes Klettelement (18) mit einer Basisplatte (88);
- eine Konterplatte (38), die wenigstens teilweise an der Boden-Verkleidung (12) angeordnet ist;
- eine Fußmatte (10);
- ein zweites Klettelement (20), das wenigstens teilweise an einer Unterseite (22) der Fußmatte (10) angeordnet ist;
wobei das zweite Klettelement (20) mit dem ersten Klettelement (18) durch eine Klettverbindung (36) verbunden ist, und ein Verbindungssystem die Basisplatte (88) und die Konterplatte (38) miteineinander verbindet, wobei das Verbindungssystem (16) eine elastische Verbindungseinrichtung (90) aufweist, wobei sich die Verbindungseinrichtung (90) zwischen einander zugewandten, insbesondere parallel zueinander verlaufenden, Seiten (60, 74) der Basisplatte (88) und der Konterplatte (38) erstreckt.

2. Fußmattenanordnung nach Anspruch 1, bei der die Basisplatte (88) ein erstes Rastelement (40) mit einem ersten Rastabschnitt (52) aufweist und die Konterplatte (38) ein zweites Rastelement (42) mit einem zweiten Rastabschnitt (54) aufweist,
wobei die elastische Verbindungseinrichtung (90) wenigstens eines der Rastelemente (40, 42) aufweist,
wobei der Rastabschnitt (52, 54) des Rastelements (40, 42) der elastischen Verbindungseinrichtung (90) elastisch verschwenkbar und/oder verformbar ist,
wobei das erste Rastelement (40) und das zweite Rastelement (42) unter Anlage des ersten Rastabschnitts (52) an dem zweiten Rastabschnitt (54) miteinander verrastet sind.

3. Fußmattenanordnung nach Anspruch 2, bei der das erste Rastelement (40) zusammen mit der Basisplatte (88) des ersten Klettelements (18) und/oder das zweite Rastelement (42) zusammen mit der Konterplatte (38) ein Extrusionsprofil mit dem jeweiligen Rastabschnitt (52, 54) aufweist, insbesondere in Form eines Extrusionsprofils ausgebildet ist.

4. Fußmattenanordnung nach Anspruch 2 oder 3, bei der das erste Rastelement (40) von einer Oberfläche des ersten Klettelements (18) in Richtung der Konterplatte (38) absteht und/oder das zweite Rastelement (42) von einer Oberfläche der Konterplatte (38) in Richtung des ersten Klettelements (18) absteht.

5. Fußmattenanordnung nach einem der Ansprüche 2 bis 4, bei der das erste Rastelement (40) und/oder das zweite Rastelement (42) einen Rastarm (44, 46, 48, 50) aufweist/aufweisen, wobei der jeweilige Rastarm (44, 46, 48, 50) einen Stamm (62, 64, 76, 78) aufweist, von dem der jeweilige Rastabschnitt (52, 54, 56, 58) absteht.

6. Fußmattenanordnung nach Anspruch 5, wobei das jeweilige Rastelement (40, 42) mehrere Rastarme (44, 46, 48, 50) aufweist, insbesondere zwei Rastarme (44, 46, 48, 50).

7. Fußmattenanordnung nach Anspruch 5 oder 6, wobei der Rastabschnitt (52, 54, 56, 58) des ersten Rastelementes (40) parallel zu einer Seitenfläche (74) des ersten Klettelements (18) verläuft und/oder der Rastabschnitt (52, 54, 56, 58) des zweiten Rastelements (42) parallel zu einer Seitenfläche (60) der Konterplatte (38) verläuft, wobei der Rastarm (44, 46, 48, 50) von der jeweiligen Seitenfläche (60, 74) absteht.

8. Fußmattenanordnung nach einem der Ansprüche 5 bis 7, bei der an dem jeweiligen Rastarm (44, 46, 48, 50) mehrere, insbesondere einander gegenüberliegende, Rastabschnitte (52, 54, 56, 58) ausgebildet sind.

9. Fußmattenanordnung nach einem der vorhergehenden Ansprüche, wobei:
- die Boden-Verkleidung (12) eine Durchgriffsöffnung (24, 66, 68) aufweist;
- die Basisplatte (88) wenigstens teilweise an einer Oberseite (28) der Boden-Verkleidung (12) angeordnet ist;
- die Konterplatte (38) wenigstens teilweise an einer Unterseite (30) der Boden-Verkleidung (12) angeordnet ist, die der Oberseite (28) der Boden-Verkleidung (12) gegenüberliegt;
- das zweite Klettelement (20) wenigstens teilweise an einer Unterseite (22) der Fußmatte (10) angeordnet ist,
wobei das Verbindungssystem (16) die Durchgriffsöffnung (24, 66, 68) durchgreift.

10. Fußmattenanordnung nach Anspruch 9 und einem der Ansprüche 2 bis 8, wobei das wenigstes eine Rastelement (40, 42) der elastischen Verbindungseinrichtung (90) in die Durchgriffsöffnung (24, 66, 68) eingeführt ist.

11. Fußmattenanordnung nach einem der vorhergehenden Ansprüche, wobei die Konterplatte (38) wenigstens teilweise an der Oberseite (28) der Boden-Verkleidung (12) stoffschlüssig befestigt ist, insbesondere durch Klebstoff.

12. Fußmattenanordnung nach Anspruch 11, wobei die Verbindungseinrichtung (90) wenigstens teilweise zwischen der Oberseite (28) der Boden-Verkleidung (12) und der Unterseite (22) der Fußmatte (10) ausgebildet ist.

13. Fußmattenanordnung nach einem der vorhergehenden Ansprüche, bei der die elastische Verbindungseinrichtung (90) ein elastisches Filmscharnier (84) aufweist, wobei das elastische Filmscharnier (84) insbesondere die Konterplatte (38) und die Basisplatte (88) miteinander verbindet.

14. Fußmattenanordnung nach einem der vorhergehenden Ansprüche, bei der die Konterplatte (38) und/oder das erste Klettelement (18) einen Stützvorsprung (82) aufweist, der von der jeweiligen Oberfläche (60, 74) der Konterplatte (38) oder des ersten Klettelements (18) absteht.

15. Fußmattenanordnung nach einem der vorhergehenden Ansprüche, bei der die Konterplatte (38) mit einem Lärmschutz (94) ausgebildet ist.

16. Fahrzeug (14) mit einer Fußmattenanordnung (8) nach einem der Ansprüche 1 bis 15.

17. Fahrzeug (14) nach Anspruch 16, bei dem die Konterplatte (38) fest mit einem Boden des Fahrzeugs (14) verbunden ist, insbesondere einstückig mit dem Boden des Fahrzeugs ausgebildet ist.

18. Verfahren zur Herstellung einer Fußmattenanordnung (8) für ein Fahrzeug (14), wobei die Fußmattenanordnung (8) Folgendes aufweist:
- eine Boden-Verkleidung (12);
- ein erstes Klettelement (18) mit einer Basisplatte (88);
- eine Konterplatte (38), die wenigstens teilweise an der Boden-Verkleidung (12) angeordnet ist;
- eine Fußmatte (10);
- ein zweites Klettelement (20), das wenigstens teilweise an der Unterseite (22) der Fußmatte (10) angeordnet ist;
wobei das zweite Klettelement (20) mit dem ersten Klettelement (18) durch eine Klettverbindung (36) verbunden wird, und die Basisplatte (88) und die Konterplatte (38) durch ein Verbindungssystem (16) miteinander verbunden sind oder verbunden werden,
wobei das Verbindungssystem (16) eine elastische Verbindungseinrichtung (90) aufweist,
wobei die elastische Verbindungseinrichtung (90) sich zwischen parallel zueinander verlaufenden, einander zugewandten Seiten (60, 74) der Basisplatte (88) und der Konterplatte (38) erstreckt.

19. Verfahren nach Anspruch 18, wobei die Basisplatte (88) ein erstes Rastelement (40) mit einem ersten Rastabschnitt (52) aufweist und die Konterplatte (38) ein zweites Rastelement (42) mit einem zweiten Rastabschnitt (54) aufweist,
aufweisend die Schritte:
i. Verrasten des ersten Rastelements (40) und des zweiten Rastelements (42) miteinander durch ein elastisches Verschwenken und/oder Verformen eines der Rastabschnitte (40, 42) unter Anlegen des ersten Rastabschnitts (52) an den zweiten Rastabschnitt (54), wobei die elastische Verbindungseinrichtung (90) das wenigstens eine Rastelement (40, 42) mit dem elastischen Rastabschnitt (52, 54) aufweist;
ii. Verbinden des ersten Klettelements (18) und des zweiten Klettelements (20).

20. Verfahren nach Anspruch 19, wobei die Boden-Verkleidung (12) eine Durchgriffsöffnung (24, 66, 68) aufweist,
wobei die elastische Verbindungseinrichtung (90) in die Durchgriffsöffnung (24, 66, 68) eingeführt wird,
wobei die Basisplatte (88) wenigstens teilweise an einer Oberseite (28) der Boden-Verkleidung (12) angeordnet wird,
wobei die Konterplatte (38) wenigstens teilweise an einer Unterseite (30) der Boden-Verkleidung (12) angeordnet wird, die der Oberseite (28) der Boden-Verkleidung (12) gegenüberliegt.

21. Verfahren nach Anspruch 19 und Anspruch 20, wobei das wenigstens eine Rastelement (40, 42) der elastischen Verbindungseinrichtung (90) in die Durchgriffsöffnung (24, 66, 68) eingeführt wird.

## Claims

1. A floor mat arrangement (8) for a vehicle (14), wherein the floor mat arrangement (8) comprises:
- a floor covering (12);
- a first hook and loop element (18) having a base plate (88);
- a counter plate (38) which is at least partially arranged on the floor covering (12);
- a floor mat (10);
- a second hook-and-loop element (20) which is at least partially arranged on an underside (22) of the floor mat (10);
wherein the second hook-and-loop element (20) is connected to the first hook-and-loop element (18) by a hook-and-loop connection (36),
and
a connection system connects the base plate (88) and the counter plate (38) with each other, wherein the connection system (16) comprises an elastic connecting device (90), wherein the connecting device (90) extends between sides (60, 74) of the base plate (88) and the counter plate (38) that face each other, in particular, run parallel to each other.

2. Floor mat arrangement according to claim 1, wherein the base plate (88) has a first locking element (40) with a first locking section (52) and the counter plate (38) has a second locking element (42) with a second locking section (54),
wherein the elastic connecting device (90) comprises at least one of the locking elements (40, 42),
wherein the locking section (52, 54) of the locking element (40, 42) of the elastic connecting device (90) is elastically pivotable and/or deformable,
wherein the first locking element (40) and the second locking element (42) are locked together with the first locking section (52) abutting the second locking section (54).

3. Floor mat arrangement according to claim 2, wherein the first locking element (40) together with the base plate (88) of the first hook-and-loop element (18) and/or the second locking element (42) together with the counter plate (38) has an extrusion profile with the respective locking section (52, 54), in particular in the form of an extrusion profile.

4. Floor mat arrangement according to claim 2 or 3, wherein the first locking element (40) protrudes from a surface of the first hook-and-loop element (18) in the direction of the counter plate (38) and/or the second locking element (42) protrudes from a surface of the counter plate (38) in the direction of the first hook-and-loop element (18).

5. Floor mat arrangement according to one of claims 2 to 4, wherein the first locking element (40) and/or the second locking element (42) has/have a locking arm (44, 46, 48, 50), wherein the respective locking arm (44, 46, 48, 50) has a stem (62, 64, 76, 78) from which the respective locking section (52, 54, 56, 58) protrudes.

6. Floor mat arrangement according to claim 5, wherein the respective locking element (40, 42) has several locking arms (44, 46, 48, 50), in particular two locking arms (44, 46, 48, 50).

7. Floor mat arrangement according to claim 5 or 6, wherein the locking section (52, 54, 56, 58) of the first locking element (40) extends parallel to a side surface (74) of the first hook-and-loop element (18) and/or the locking section (52, 54, 56, 58) of the second locking element (42) extends parallel to a side surface (60) of the counter plate (38), wherein the locking arm (44, 46, 48, 50) protrudes from the respective side surface (60, 74).

8. Floor mat arrangement according to one of claims 5 to 7, wherein several, in particular mutually opposite, locking sections (52, 54, 56, 58) are formed on the respective locking arm (44, 46, 48, 50).

9. Floor mat arrangement according to one of the preceding claims, wherein:
- the floor covering (12) has a passage opening (24, 66, 68);
- the base plate (88) is arranged at least partially on an upper side (28) of the floor covering (12);
- the counter plate (38) is arranged at least partially on an underside (30) of the floor covering (12) opposite the upper side (28) of the floor covering (12);
- the second hook-and-loop element (20) is arranged at least partially on an underside (22) of the floor mat (10),
wherein the connecting system (16) engages through the passage opening (24, 66, 68).

10. Floor mat arrangement according to claim 9 and one of claims 2 to 8, wherein the at least one locking element (40, 42) of the elastic connecting device (90) is inserted into the passage opening (24, 66, 68).

11. Floor mat arrangement according to one of the preceding claims, wherein the counter plate (38) is at least partially attached to the upper side (28) of the floor covering (12) by a material bond, in particular by means of adhesive.

12. Floor mat arrangement according to claim 11, wherein the connecting device (90) is at least partially formed between the upper side (28) of the floor covering (12) and the underside (22) of the floor mat (10).

13. Floor mat arrangement according to one of the preceding claims, wherein the elastic connecting device (90) comprises an elastic film hinge (84), wherein the elastic film hinge (84) in particular connects the counter plate (38) and the base plate (88) to each other.

14. Floor mat arrangement according to one of the preceding claims, wherein the counter plate (38) and/or the first hook-and-loop element (18) has a support projection (82) which protrudes from the respective surface (60, 74) of the counter plate (38) or the first hook-and-loop element (18).

15. Floor mat arrangement according to one of the preceding claims, wherein the counter plate (38) is formed with noise protection (94).

16. Vehicle (14) with a floor mat arrangement (8) according to one of claims 1 to 15.

17. Vehicle (14) according to claim 16, wherein the counter plate (38) is firmly connected to a floor of the vehicle (14), in particular is formed integrally with the floor of the vehicle.

18. Method for manufacturing a floor mat arrangement (8) for a vehicle (14), wherein the floor mat arrangement (8) comprises:
- a floor covering (12);
- a first hook-and-loop element (18) with a base plate (88);
- a counter plate (38) arranged at least partially on the floor covering (12);
- a floor mat (10);
- a second hook-and-loop element (20) arranged at least partially on the underside (22) of the floor mat (10);
wherein the second hook-and-loop element (20) is connected to the first hook-and-loop element (18) by means of a hook-and-loop connection (36),
and
the base plate (88) and the counter plate (38) are or can be connected to each other by a connection system (16),
wherein the connection system (16) comprises an elastic connecting device (90),
wherein the elastic connecting device (90) extends between parallel, facing sides (60, 74) of the base plate (88) and the counter plate (38).

19. Method according to claim 18, wherein the base plate (88) comprises a first locking element (40) with a first locking section (52) and the counter plate (38) comprises a second locking element (42) with a second locking section (54), comprising the steps:
i. locking the first locking element (40) and the second locking element (42) together by elastically pivoting and/or deforming one of the locking sections (40, 42) while applying the first locking section (52) to the second locking section (54), wherein the elastic connecting means (90) comprising the at least one locking element (40, 42) with the elastic locking section (52, 54);
ii. connecting the first hook-and-loop element (18) and the second hook-and-loop element (20).

20. Method according to claim 19, wherein the floor covering (12) has a passage opening (24, 66, 68),
wherein the elastic connecting device (90) is inserted into the passage opening (24, 66, 68),
wherein the base plate (88) is at least partially arranged on an upper side (28) of the floor covering (12),
wherein the counter plate (38) is at least partially arranged on a lower side (30) of the floor covering (12) opposite the upper side (28) of the floor covering (12).

21. Method according to claim 19 and claim 20, wherein the at least one locking element (40, 42) of the elastic connecting device (90) is inserted into the passage opening (24, 66, 68).

## Revendications

1. Agencement (8) de tapis de sol destiné à un véhicule (14), ledit agencement (8) de tapis de sol comprenant :
- un revêtement de sol (12) ;
- un premier élément auto-agrippant (18) muni d'une plaque de base (88) ;
- une plaque complémentaire (38) disposée, au moins en partie, sur ledit revêtement de sol (12) ;
- un paillasson (10) ;
- un second élément auto-agrippant (20), au moins partiellement disposé au niveau d'une face inférieure (22) dudit paillasson (10) ;
sachant que ledit second élément auto-agrippant (20) est relié audit premier élément auto-agrippant (18) au moyen d'une liaison (36) par auto-agrippage,
et qu'un système de liaison relie mutuellement la plaque de base (88) et la plaque complémentaire (38), lequel système de liaison (16) est doté d'un dispositif élastique de solidarisation (90), ledit dispositif de solidarisation (90) s'étendant entre des faces (60, 74) de ladite plaque de base (88) et de ladite plaque complémentaire (38) qui sont tournées l'une vers l'autre et sont notamment parallèles l'une à l'autre.

2. Agencement de tapis de sol selon la revendication 1, dans lequel la plaque de base (88) et la plaque complémentaire (38) sont respectivement pourvues d'un premier élément encliquetable (40), comportant une première zone d'encliquetage (52), et d'un second élément encliquetable (42) comportant une seconde zone d'encliquetage (54),
le dispositif élastique de solidarisation (90) comprenant au moins l'un desdits éléments encliquetables (40, 42),
sachant que la zone d'encliquetage (52, 54) de l'élément encliquetable (40, 42) dudit dispositif élastique de solidarisation (90) est apte à pivoter et/ou à se déformer élastiquement,
ledit premier élément encliquetable (40) et ledit second élément encliquetable (42) étant solidarisés par crantage sous l'effet d'une venue en applique de ladite première zone d'encliquetage (52) sur ladite seconde zone d'encliquetage (54).

3. Agencement de tapis de sol selon la revendication 2, dans lequel le premier élément encliquetable (40) associé à la plaque de base (88) du premier élément auto-agrippant (18), et/ou le second élément encliquetable (42) associé à la plaque complémentaire (38), présente(nt) un profil extrudé comportant la zone d'encliquetage (52, 54) respective, et est(sont) notamment réalisé(s) sous la forme d'un profil extrudé.

4. Agencement de tapis de sol selon la revendication 2 ou 3, dans lequel le premier élément encliquetable (40) fait saillie au-delà d'une surface du premier élément auto-agrippant (18), en direction de la plaque complémentaire (38), et/ou le second élément encliquetable (42) fait saillie au-delà d'une surface de ladite plaque complémentaire (38) en direction dudit premier élément auto-agrippant (18).

5. Agencement de tapis de sol selon l'une des revendications 2 à 4, dans lequel le premier élément encliquetable (40) et/ou le second élément encliquetable (42) présente(nt) un bras encliquetable (44, 46, 48, 50), le bras encliquetable (44, 46, 48, 50) considéré étant muni d'une membrure (62, 64, 76, 78) au-delà de laquelle la zone d'encliquetage respective (52, 54, 56, 58) est en saillie.

6. Agencement de tapis de sol selon la revendication 5, dans lequel l'élément encliquetable considéré (40, 42) compte plusieurs bras encliquetables (44, 46, 48, 50), deux bras encliquetables (44, 46, 48, 50) en particulier.

7. Agencement de tapis de sol selon la revendication 5 ou 6, dans lequel la zone d'encliquetage (52, 54, 56, 58) du premier élément encliquetable (40) s'étend parallèlement à une face latérale (74) du premier élément auto-agrippant (18), et/ou la zone d'encliquetage (52, 54, 56, 58) du second élément encliquetable (42) s'étend parallèlement à une face latérale (60) de la plaque complémentaire (38), sachant que le bras encliquetable (44 , 46, 48, 50) fait saillie au-delà de la face latérale (60, 74) respective.

8. Agencement de tapis de sol selon l'une des revendications 5 à 7, dans lequel plusieurs zones d'encliquetage (52, 54, 56, 58), pointant notamment à l'opposé les unes des autres, sont façonnées sur le bras encliquetable (44, 46, 48, 50) considéré.

9. Agencement de tapis de sol selon l'une des revendications précédentes, dans lequel
- le revêtement de sol (12) est pourvu d'un orifice de passage (24, 66, 68) ;
- la plaque de base (88) est disposée, au moins en partie, au niveau d'une face supérieure (28) dudit revêtement de sol (12) ;
- la plaque complémentaire (38) est disposée, au moins en partie, au niveau d'une face inférieure (30) dudit revêtement de sol (12) qui pointe à l'opposé de ladite face supérieure (28) du revêtement de sol (12) ;
- le second élément auto-agrippant (20) est disposé, au moins en partie, au niveau d'une face inférieure (22) du paillasson (10),
sachant que le système de liaison (16) traverse de part en part ledit orifice de passage (24, 66, 68).

10. Agencement de tapis de sol selon la revendication 9 et l'une des revendications 2 à 8, dans lequel l'élément encliquetable (40, 42), à présence minimale dans le dispositif élastique de solidarisation (90), est inséré dans l'orifice de passage (24, 66, 68).

11. Agencement de tapis de sol selon l'une des revendications précédentes, dans lequel la plaque complémentaire (38) est au moins partiellement fixée à la face supérieure (28) du revêtement de sol (12) par solidarisation matérielle, notamment à l'aide d'un adhésif.

12. Agencement de tapis de sol selon la revendication 11, dans lequel le dispositif de solidarisation (90) est réalisé, au moins en partie, entre la face supérieure (28) du revêtement de sol (12) et la face inférieure (22) du paillasson (10).

13. Agencement de tapis de sol selon l'une des revendications précédentes, dans lequel le dispositif élastique de solidarisation (90) est nanti d'une charnière pelliculaire élastique (84), sachant que ladite charnière pelliculaire élastique (84) relie notamment, l'une à l'autre, la plaque complémentaire (38) et la plaque de base (88).

14. Agencement de tapis de sol selon l'une des revendications précédentes, dans lequel la plaque complémentaire (38), et/ou le premier élément auto-agrippant (18), comporte(nt) une protubérance d'appui (82) qui fait saillie au-delà de la face respective (60, 74) de ladite plaque complémentaire (38) ou dudit premier élément auto-agrippant (18).

15. Agencement de tapis de sol selon l'une des revendications précédentes, dans lequel la plaque complémentaire (38) est dotée d'une protection antibruit (94).

16. Véhicule (14) équipé d'un agencement (8) de tapis de sol conforme à l'une des revendications 1 à 15.

17. Véhicule (14) selon la revendication 16, la plaque complémentaire (38) étant reliée rigidement à un plancher dudit véhicule (14), notamment conçue d'un seul tenant avec ledit plancher du véhicule.

18. Procédé de fabrication d'un agencement (8) de tapis de sol destiné à un véhicule (14), ledit agencement (8) de tapis de sol comprenant :
- un revêtement de sol (12) ;
- un premier élément auto-agrippant (18) muni d'une plaque de base (88) ;
- une plaque complémentaire (38) disposée, au moins en partie, sur ledit revêtement de sol (12) ;
- un paillasson (10) ;
- un second élément auto-agrippant (20) disposé, au moins en partie, au niveau de la face inférieure (22) dudit paillasson (10),
sachant que ledit second élément auto-agrippant (20) est relié audit premier élément auto-agrippant (18) au moyen d'une liaison (36) par auto-agrippage,
et que ladite plaque de base (88) et ladite plaque complémentaire (38) sont reliées l'une à l'autre ou font postérieurement l'objet d'une solidarisation au moyen d'un système de liaison (16), ledit système de liaison (16) étant doté d'un dispositif élastique de solidarisation (90),
lequel dispositif élastique de solidarisation (90) s'étend entre des faces (60, 74) de ladite plaque de base (88) et de ladite plaque complémentaire (38) qui sont parallèles l'une à l'autre et sont tournées l'une vers l'autre.

19. Procédé selon la revendication 18, la plaque de base (88) et la plaque complémentaire (38) étant respectivement pourvues d'un premier élément encliquetable (40), comportant une première zone d'encliquetage (52), et d'un second élément encliquetable (42) comportant une seconde zone d'encliquetage (54),
incluant les étapes suivantes :
i. crantage réciproque du premier élément encliquetable (40) et du second élément encliquetable (42) par pivotement et/ou déformation élastique(s) de l'une des zones d'encliquetage (52, 54), sous l'effet d'une venue en applique de la première zone d'encliquetage (52) sur la seconde zone d'encliquetage (54), sachant que le dispositif élastique de solidarisation (90) comprend l'élément encliquetable (40, 42) à présence minimale, comportant la zone élastique d'encliquetage (52, 54) ;
ii. liaison du premier élément auto-agrippant (18) et du second élément auto-agrippant (20).

20. Procédé selon la revendication 19, le revêtement de sol (12) étant pourvu d'un orifice de passage (24, 66, 68),
le dispositif élastique de solidarisation (90) étant inséré dans ledit orifice de passage (24, 66, 68),
la plaque de base (88) étant disposée, au moins en partie, au niveau d'une face supérieure (28) dudit revêtement de sol (12),
la plaque complémentaire (38) étant disposée, au moins en partie, au niveau d'une face inférieure (30) dudit revêtement de sol (12) qui pointe à l'opposé de ladite face supérieure (28) du revêtement de sol (12).

21. Procédé selon la revendication 19 et la revendication 20, dans lequel l'élément encliquetable (40, 42), à présence minimale dans le dispositif élastique de solidarisation (90), est inséré dans l'orifice de passage (24, 66, 68).
